# EUROPEAN PATENT APPLICATION

(11) **EP 4 621 445 A1**
(43) Date of publication of application: **24.09.2025**
(21) Application number: 25164035.5
(22) Date of filing: 17.03.2025
(51) Int. Cl.: G01T 1/161

(54) **PARTICLE DETECTOR DEVICE ADAPTED FOR APPLICATION IN MINIMALLY INVASIVE NUCLEAR MEDICINE RADIO-GUIDED SURGERY (RGS), AND METHOD OF MANUFACTURING THE DEVICE**

(30) Priority: 21.03.2024 IT 202400006289
(71) Applicant: Istituto Nazionale di Fisica Nucleare, 00044 Frascati (RM) (IT); Universita' Degli Studi di Roma "La Sapienza", 00185 Roma (RM) (IT)
(72) Inventor: COLLAMATI, Francesco, Roma (RM) (IT); MORGANTI, Silvio, Roma (RM) (IT); MIRABELLI, Riccardo, Roma(RM) (IT)
(74) Representative: Metroconsult Srl

(57) **Abstract**

Beta-particle detector device adapted for applications of mini-invasive radio-guided surgery, the device being provided with an outer shell, said outer shell having a front element, through which incident radiation enters when in use, and a rear element, through which electric wires come out, which are adapted to transport an electric signal when in use, and characterized in that it has a sequentially assembled modular structure and comprises the following components, adapted to be inserted, when assembled, in said outer shell (J1a, J1b, B1):
- an ambient light absorber (F1a), adapted to prevent light with a wavelength in the visible spectrum or in the near-UV spectrum from entering said device, and adapted to let said beta particles enter the device;
- a scintillator (F1b), positioned downstream of said absorber (F1a) along the direction of said incident radiation and said beta particles, and adapted to receive said beta particles from said absorber (F1a) and convert them into light,
- a first housing (F1c) for said scintillator (F1b), adapted to fully contain said scintillator (F1b),
- a light detector (F1d), positioned downstream of said scintillator (F1b) along the direction of said beta particles and said light, said light detector (F1d) being adapted to convert the light produced by said scintillator into an electric signal, said light detector (F1d) being provided with electric wires (F1g) exiting on the side opposite said first housing (F1c),
- a second housing (F1e) for said light detector (F1d), adapted to fully contain said light detector (F1d);
- a cable holder (F1f), positioned downstream of said second housing (F1e) along the direction of said light, and adapted to contain said electric wires (F1g) and let them exit said device.

## Description

### Field of the invention

The present invention relates to the field of particle detectors for nuclear medicine, more specifically for mini-invasive Radio-Guided Surgery applications.

### Technical problem to be solved

Radio-Guided Surgery is a nuclear medicine technique based on intraoperative detection of the radioactive decay of a radiopharmaceutical during a surgical procedure for tumour removal.

This technique is used when tumor cells express specific receptors for certain molecules, thus making it very likely that the latter will bind to the tumor. Shortly before surgery, the patient is administered a radiopharmaceutical composed of a combination of the tumor-specific molecule (carrier) and a radioactive isotope. The surgeon uses a tool ("probe" or "detector") which can detect, in real time, the radiation emitted by the various tissues following drug diffusion. Such tool allows discerning between healthy and diseased tissues, highlighting the presence of any anomalous radiopharmaceutical concentrations that are typically associated with the presence of tumor residues. Audio or (graphical or alphanumerical) video feedback is normally employed to guide the surgeon in identifying the most active areas.

This technique is widely used with drugs that contain isotopes whose decay produces gamma radiation (photons), such as, for example, ^{99m}Tc. However, this type of radiation is characterized by high tissue penetration. Therefore, this "standard" technique loses its effectiveness when the tumor is close to organs characterized by high physiological drug absorption. In such cases, as a matter of fact, the signal coming from the tumor overlaps, and is masked by, the one coming from the healthy organ ("shine through"), so that it cannot be identified.

In this context, renewed interest has arisen in recent years in the possibility of using beta-emitting isotopes (electrons/positrons) instead of gamma-emitting ones. The main difference between such two decay products being that beta radiation penetrates tissues much less than gamma radiation (mm vs cm), thus significantly reducing the above-mentioned shine through effect and extending the use of RGS (Radio-Guided Surgery) to anatomical districts which could not otherwise be treated with this technique.

This approach is of particular interest in the field of "mini-invasive" surgery, e.g. robotic surgery.

However, for such applications the probe must also meet, in addition to all legal requirements that apply to medical devices, special constraints and characteristics. In particular, by way of non-limiting example, it must have:
- A transverse dimension of less than 11-12mm, so that it can be inserted in the operative field through the standard access points (trocar) employed by the mini-invasive technique;
- High capability of beta-radiation detection in the areas of contact with the tissues under examination (e.g.: 90% efficiency for electrons with energy > 70KeV),
- High opacity to visible light of all parts of the device.

### Description of the prior art

In recent years there has been a growing interest in "mini-invasive" surgery, which has led the producers of "traditional" probes to manufacture and sell also probes designed for mini-invasive Radio-Guided Surgery (e.g. robotic surgery) based on gamma-radiation detection.

Such devices still use many technical solutions of traditional probes, like collimators and shields made of high density materials (e.g. tungsten, titanium), in order to optimize the gamma detection performance and increase the resolution of the tool.

Since high-density materials need to be used, the device is generally provided with an external covering of surgical steel. While this makes it easy to fulfil a number of requirements, such as sterilizability, biocompatibility of materials in contact with tissues, mechanical strength, resistance to liquids and light tightness, it makes the probe completely opaque to beta radiation.

Within a "mini-invasive" operative context, no detectors capable of detecting the radioactive decay of a radiopharmaceutical for beta particles are known which can simultaneously offer:
- clinically relevant efficiency in beta-radiation detection;
- advantages that are specific for mini-invasive surgery, such as device lightness and miniaturization potential.

### Summary of the invention

The goal of the present invention is to propose a modular, compact, sequentially assembled structure of a detector specifically conceived for beta-particle detection (electrons and positrons) and optimized for mini-invasive surgery, which can overcome the above-mentioned limitations of traditional probes.

Several technologies are currently being used for beta-radiation detection (scintillation light, solid-state detectors, gas-type detectors, etc.) in many different applications, including the fabrication of medical devices for open-field Radio-Guided Surgery.

Devices for this latter application must comply with a number of specific construction and operational constraints, the extension of which to mini-invasive surgery cannot be taken for granted. As a matter of fact, no designs are currently known which allow for mini-invasive Radio-Guided Surgery based on direct beta-radiation detection. Therefore, the present invention proposes a process for making a beta-particle detector which makes it possible to transfer the performance of an open-field beta-particle detector to mini-invasive surgery, while at the same time solving the specific problems posed by this clinical technique.

The structural and operational characteristics of a probe for "open-field" radio-guided surgery are the following:
1. Operating spaces do not pose any particular constraints as to the shape and dimensions of the device, in comparison with other surgical tools normally available to the surgeon;
2. The device is gripped and manoeuvred directly by the surgeon;
3. Differently shaped tools (e.g. straight, with an angled head) can be used during the surgery depending on the complexity of the operative field, so as to increase the possibility of correctly framing the region of interest;
4. There are no stringent constraints as to the sterilizability of the device, due to the possibility of inserting it into disposable sterile covers, thus also solving the problem of liquid impermeability;
5. The same precaution, since it avoids any direct contact between the device and the tissues, reduces the biocompatibility requirements for the materials in use;

It has been found that, in a probe for mini-invasive surgery, the above-listed characteristics have to be modified as follows:
1. Operating spaces are such as to pose stringent constraints as to the shape and dimensions of the device;
2. Interaction between surgeon and probe is mediated by servo-assisted electromechanical instruments (e.g. robotic arms);
3. Considering the complexity of the operative field, the probe must have such dimensions and weight that make it easy to correctly frame the region of interest;
4. The device must be sterilizable and impermeable to liquids;
5. Since it is intended to come directly in contact with tissues, the device must be made of biocompatible material;

In addition to the above, other characteristics specifically apply to mini-invasive surgery:
6. Due to close vicinity with other surgical tools (scalpels, forceps), it is necessary that the structure is resistant to all mechanical stresses that may occur in an operative context (shocks against other instruments, compression stress, contact with sharp tools);
7. The overall dimensions must be optimized (e.g. length shorter than 5cm) to ensure full operability of the probe during target-aiming manoeuvres (e.g. through three-axis translational and rotational movements), when manoeuvred with the standard tools of a surgical robot;
8. Presence of electromagnetic shielding to avoid any interference from other surgical instruments.

In order to meet these general criteria, a sequentially assembled modular detector structure has been developed which permits the insertion, one at a time, of the various elements that constitute the beta-particle detector, such as the scintillator and the light detector, thanks to a system of openings and housings ensuring correct positioning and coupling of such components in a controlled and reproducible manner.

The modular structure of the detector offers the possibility of optimizing its performance (e.g. by using scintillating crystals of different shape and thickness) for use with different isotopes (e.g. for novel radiopharmaceuticals that may become available in the future) or for different operating modes (evolutions of the surgical technique), without modifying the procedures and technical solutions associated therewith.

The present invention relates to a beta-particle detector device as set out in claim 1.

The present invention further relates to a method of making said device as set out in claim 10.

Dependent claims 2 to 9 define some preferred variations of said device, while dependent claims 11 to 13 define some preferred variations of said method.

All claims are intended as integral parts of the present description.

### Brief description of the drawings

Further objects and advantages of the present invention will become apparent in light of the following detailed description of an exemplary embodiment (and variants thereof) provided herein with reference to the annexed drawings, which are merely supplied by way of non-limiting example, wherein:
Figure 1 shows an exploded view of an illustrative embodiment of some parts of the detector of the present invention;

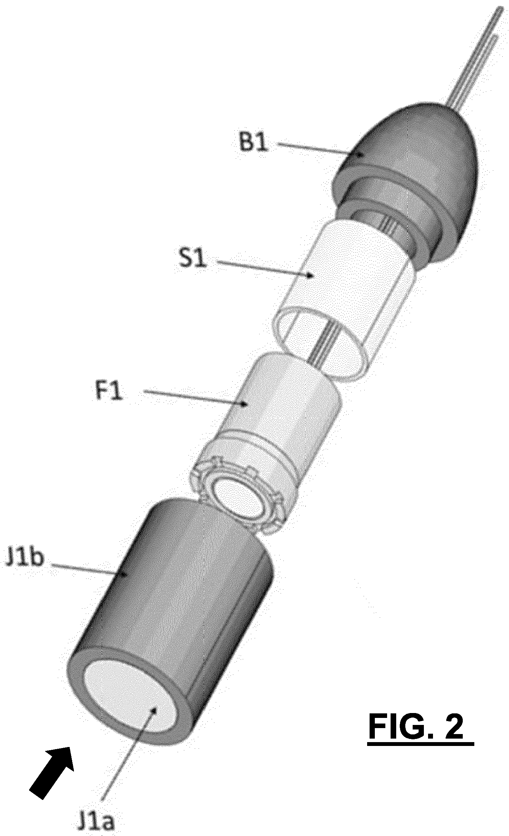

Figure 2 shows an exploded view of the illustrative embodiment of Fig. 1 with all parts of the detector of the present invention;

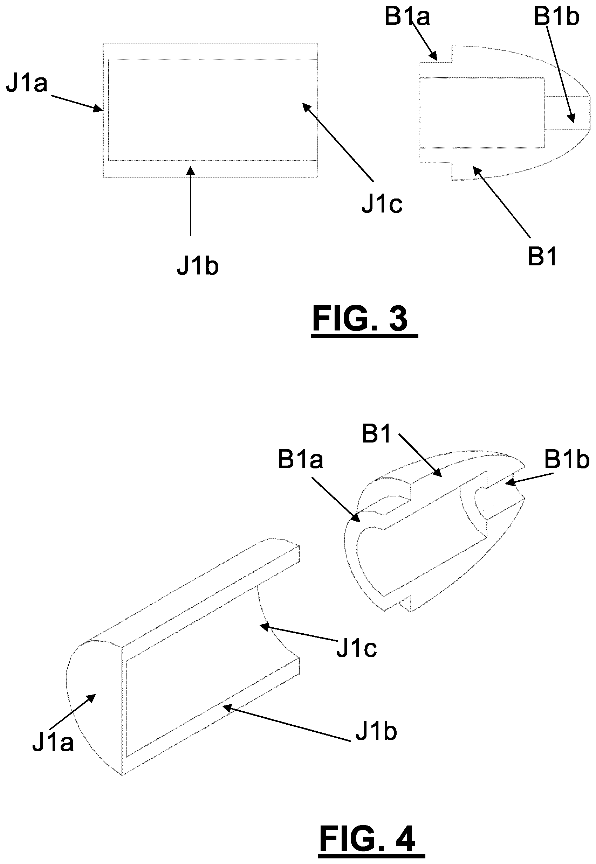

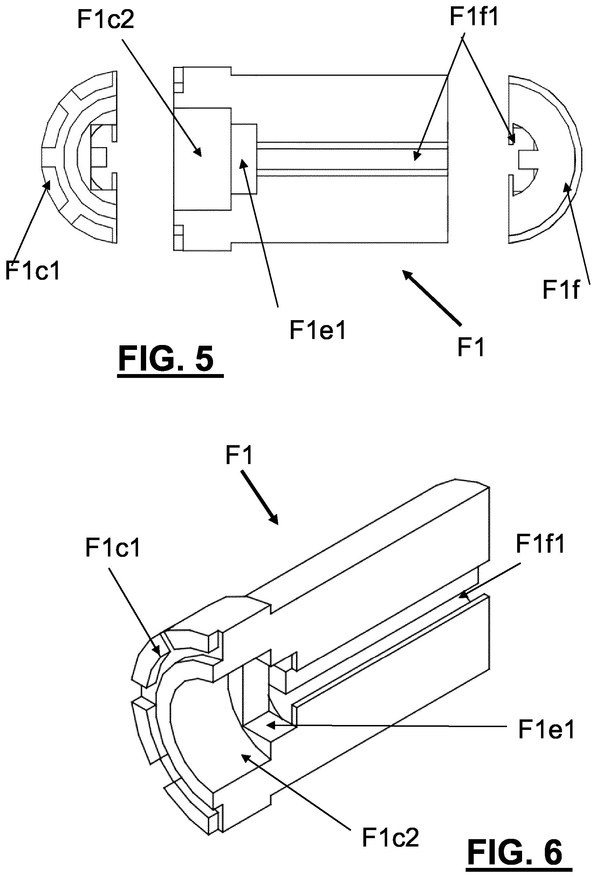

Figures 3, 4, 5, 6 are longitudinal sectional views of some parts of the detector of the present invention;

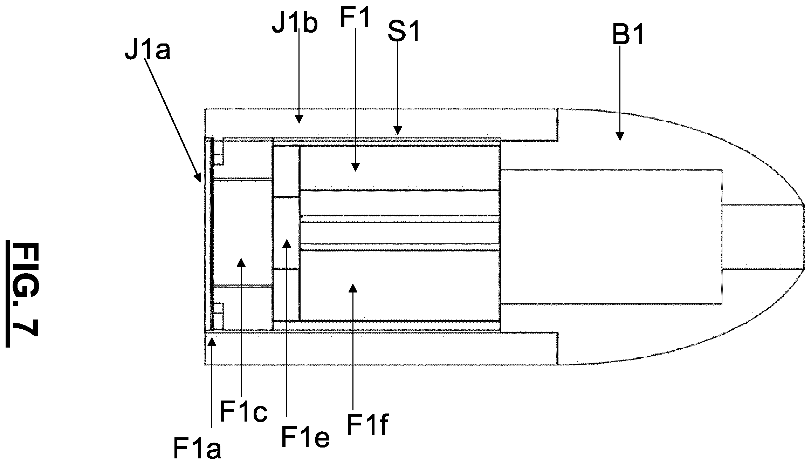

Figure 7 shows a longitudinal sectional view of the detector of the present invention in the assembled condition;
Figures 8a, 8b are longitudinal sectional views of the detector of the present invention, highlighting the radiation fluxes in the front part.

In the drawings, the same reference numerals and letters identify the same items or components.

### Detailed description of some embodiments

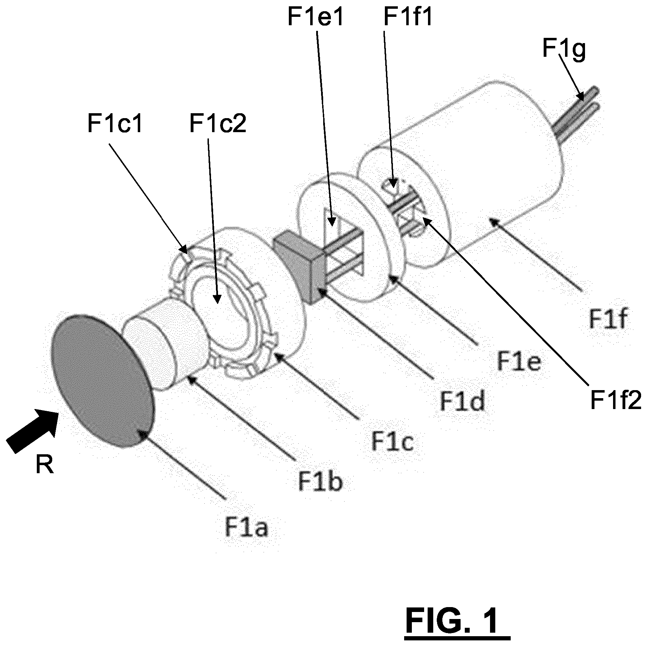

Figure 1 shows a non-limiting example of some parts of the beta-particle detector according to the invention, which comply with the above-described general construction criteria. It comprises the following elements, shown in an exploded view in the indicated positioning sequence:
- an ambient light absorber F1a, a scintillator F1b, a housing F1c for the scintillator F1b, a light detector F1d, a housing F1e for the light detector F1d, a cable holder F1f.

The ambient light absorber F1a (black shield) performs a primary filtering function, i.e. it prevents light with a wavelength in the visible spectrum and in the near-UV spectrum from entering the detector device. Its purpose is to limit the background noise of the device, preventing the probe from interpreting the simple contribution of ambient light as a radiation flux. The absorber lets through beta particles, directed towards the inside of the detector.

A non-limiting basic embodiment of the ambient light absorber F1a employs a thin-film layer (e.g. disk-shaped) of a material with a low atomic number ("Z") and high absorbing power in the visible spectrum. The material must simultaneously fulfil three conditions: 1) it must prevent the entry of visible light, 2) it must ensure maximum transparency to beta particles; 3) it must be adequately resistant to mechanical stresses that might otherwise alter the performance or cause failure of adjacent components.

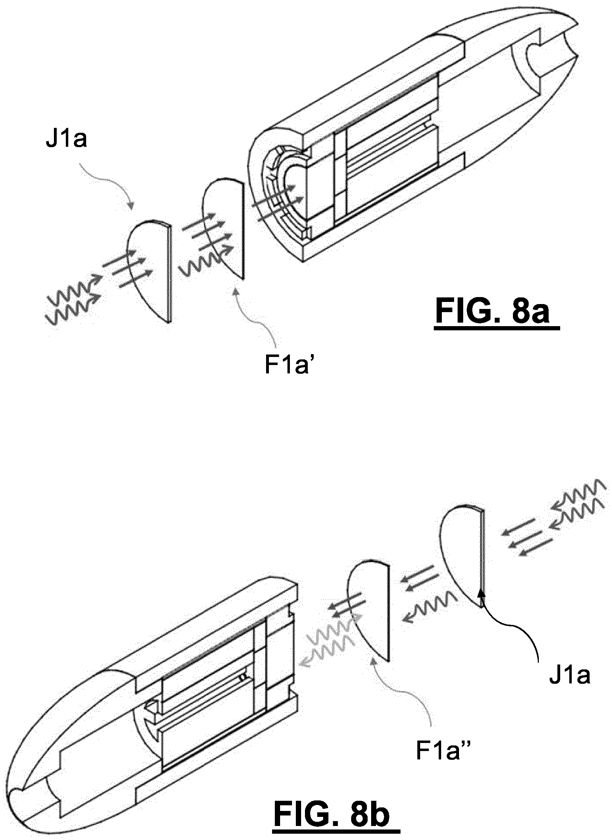

A variant embodiment of the ambient light absorber F1a uses a layer of material having different optical properties on its two sides, as shown in Figures 8a, 8b: in more detail, in this variant embodiment the ambient light absorber F1a can be realized by coupling:
- an absorbing wall F1a', positioned on the outer side (facing towards the radiation inlet), and a reflecting (or diffusive) wall F1a", positioned on the inner side (facing towards the inside of the detector).

The absorbing wall F1a' and the reflecting wall F1a" have substantially the same dimensions and are placed in contact with each other in such a way that their respective perimetric (circumferential) edges are substantially coincident.

The absorbing wall F1a' is shown in Figure 8a, and the reflecting wall F1a" is shown in Figure 8b.

The ambient light absorber F1a thus made increases the light fraction, produced inside the scintillator, that is able to reach the light detector F1d.

According to the detector's general construction described below, the detection system is encapsulated into a single mechanical structure (see items J1a, J1b, which will be further discussed below), which is entrusted with the task of protecting the internal components against mechanical stresses.

Due to the absence of any mechanical constraints as to layer construction (e.g. obtained by encapsulating the whole assembly into a protective enclosure), the optical function of the absorber can be optimized to contribute to the absorbing properties of the interface, or to add reflecting properties to the front part of the device.

The above-described variant embodiment of the absorber F1a (see Figures 8a, 8b) employs an absorber (absorbing side F1a') consisting of a thin layer (less than 50µm) of PVF (polyvinyl fluoride) having a shape suitable to cover the sensitive part (e.g. a disk having a diameter of 10mm). For the reflecting part of the absorber (side F1a"), a 5µm layer of aluminized mylar or a 15µm layer of aluminium film can be used.

The main function of the scintillator F1b, which is positioned downstream of the absorber F1a along the direction of the incident radiation (arrow R), is to convert the energy released by beta radiation, which crosses the material, into light (e.g. in the near-UV spectrum: ~300nm). The electric signal obtained, and hence the characteristics of the electronic system that translates the signal into counts per second, are dependent on the amount of light produced (light yield) and on the optical/mechanical properties of the scintillator (thickness, transparency).

Some non-limiting basic embodiments of the scintillator F1b offer the following alternatives.

P-terphenyl is the preferred candidate material for detecting charged particles also in the presence of background radiation of neutral particles. The basic design is a cylindrical solid having a diameter of ~5-6mm and a thickness of 2-3mm.

Possible variant embodiments of the scintillator F1b:
- Its size may vary according to the application, and its thickness may be even smaller (e.g. 1mm or even less). Non-cylindrical shapes may also be used, e.g. parallelepipedons or other solids.
- In addition to using volumes of p-terphenyl of a given thickness and a given shape, ultra-thin layers (e.g. 100um) can also be used, e.g. obtained by "sputtering" the material (e.g. p-terphenyl and/or another material) onto a substrate suitable for light collection.
- P-terphenyl may be replaced with commercial or *ad hoc* plastic scintillators to obtain high light yield with small thicknesses.

The function of the housing F1c (crystal housing) of the scintillator F1b is to precisely position the scintillator inside the detector to optimize the centering thereof and the coupling thereof with the preceding layer (the light absorber F1a) on one side and with the light detector F1d on the other side, so as to maximize the light collection efficiency.

According to a non-limiting basic embodiment of the housing F1c, the stereolithography 3D printing technique (e.g. by LCD laser) is used with technical materials suitable to ensure submillimeter dimensional precision of the mechanical part (e.g. PEEK, ABS, ASA). An inner cavity F1c2, which has a shape suitable to house the scintillator (e.g. cylindrical, cubical, etc.), is formed in a solid reproducing the profile (cylinder, parallelepipedon) of the structure into which it is to be inserted.

Glue can be used to secure the ambient light absorber. Grooves F1c1 (excess glue bleed lines) may be formed in the housing F1c to facilitate the removal of any excess glue.

The function of the light detector F1d, which is positioned downstream of the scintillator F1b along the direction of the beta radiation (arrow R), is to convert the scintillation light produced by the scintillator F1b into a detectable electric signal.

A non-limiting basic embodiment uses a 3x3mm Silicon Photo Multiplier (SiPM), e.g. the Hamamatsu^{®} MPPC S14160/3050HS device.

Possible variants may use a differently sized SiPM (e.g.. 1×1mm) or SiPM arrays (e.g. an array of four 1×1mm SiPMs).

Other scintillation light detection technologies may also be used (e.g. "APD", photodiodes, solid-state detectors).

The function of the housing F1e (SiPm housing) of the light detector F1d is to ensure an ideal coupling between the light detector F1d and the scintillator F1b, e.g. a coupling without any gap between such two components.

According to a non-limiting basic embodiment, the method of construction of the housing F1makes use of the 3D printing technique (e.g. on resin).

The housing F1e has an internal hole F1e1 having a shape and a size matching those of the light detector F1d (e.g. 3x3mm); for example, it has a cylindrical outer shape, with a diameter corresponding to that of the other parts of the modular detector system, and a thickness allowing contact between the light detector F1d and the scintillator F1b.

In some possible variants, the thickness of the housing F1e of the light detector is such that optical grease, or any other product maximizing light collection, can be inserted therein, thereby minimizing the fraction of scintillation light that is lost and does not reach the light detector F1d.

The function of the cable holder F1f, which is positioned downstream of the light detector F1d along the direction of the beta radiation, is to allow the electric wires F1g to correctly and orderly come out of the light detector F1d, while allowing the light detector F1d to be controllably and reproducibly assembled into its housing F1e by pulling the wires.

The cable holder F1f has internal through holes F1f1 into which the wires of the light detector are routed.

Advantageously, the cable holder F1f is provided with at least one abutment wall F1f2. The internal through holes F1f1 are formed on the abutment wall F1f2. In this way, the light detector F1d will stay in abutment with the abutment wall F1f2 at the end of the device assembly process, which will be further described below.

According to a non-limiting basic embodiment, the cable holder F1f is made of a material, e.g. resin, by 3D printing, with an outer shape that may, for example, be cylindrical, and a diameter corresponding to that of the other parts of the modular detector system.

Its thickness must be such as to prevent the wires from bending too close to their welding points on the light detector F1d. Its inner shape must be such as to allow for easy insertion of the wires, but narrower than the dimension of the light detector F1d, which must stop in abutment therewith during the pulling action exerted in the course of the assembly process.

According to some possible variants, the shape of the internal through holes F1f1 may vary depending on specific construction requirements (e.g. 3D printing or CNC machining) or according to the shape and gauge of the wires.

In the preferred embodiment, the elements F1c, F1e, F1f are produced as one piece from the same material, e.g. by 3D printing. It is however also possible to manufacture them separately, e.g. by using different technologies.

One or more of the housings F1c, F1e and the cable holder F1f may be coated with a thin layer of material S1 to ensure insulation against electromagnetic interference (radio signals, electric scalpels, etc.). For example, a 100µm layer of copper or another suitable material may be used. Such material may also be deposited by spraying.

The assembly composed of all the above-described elements must be inserted into an outer shell (enclosure) J1a, J1b, B1 that ensures "medical readiness", e.g. as concerns sterilizability and impermeability.

One possible embodiment of the outer shell is based on two elements, i.e. a front element J1a, J1b and a rear element B1, which can be coupled together in a liquid-tight manner (e.g. by means of O-rings), e.g. ensured by a suitably sized protrusion B1a to be inserted into the open inner part J1c of the front element.

Following the direction of the beta radiation, the front element of the outer shell may, for example, be cup-shaped, like a hollow cylinder closed at one end by a very thin front wall J1a (e.g. 100um thick) and open at the opposite end J1c.

The rear element B1 may have different shapes. For example, known solutions may be used to make the detector easily manoeuvrable by mini-invasive surgery instruments (e.g. drop-in gamma probes). In the rear part there is an opening B1b allowing the wires F1g to come out.

The front and rear elements must be both made of biocompatible and mechanically strong material (e.g. PEEK), and can be produced by 3D printing, CNC machining, or mechanical machining.

As a whole, the outer shell J1a, J1b, B1 must fulfil the already mentioned requirements in terms of dimensions, weight and tightness. It may also be constructed otherwise, or anyway in a manner such as to be able to firmly contain all the other components of the detector. For example, the front wall J1a may be a separate element adapted to be sealingly inserted into the remaining part of the outer shell J1b, B1, which may either be a separate element or be made up of two elements J1b and B1. The general shape of the outer shell is preferably substantially cylindrical, but other shapes are possible as well, provided that they are compatible with the dimensions of the elements contained therein.

For the detector to preserve the necessary sensitivity to beta radiation, the outer shell must be so constructed as to oppose as little material as possible to the detector's front-end, in order to avoid absorbing the beta radiation of interest.

For this purpose, a mechanical procedure for machining the front wall J1a from any plastic material and with any shape has been developed, through which the front layer can be made very thin in a reproducible and controlled manner.

This type of element J1a can be typically produced by turning it on a lathe, thereby obtaining a front window thickness of about 1mm, which is however incompatible with its use as an outer shell for a beta-particle detector for standard Radio-Guided Surgery, since such a thickness would be sufficient to block the beta radiation produced by the radio isotopes used in RGS. The thickness of the element J1a can be reduced by:
- abrasion with abrasive paper or powder, obtained by making regular and repetitive movements, e.g. through the use of a robotic arms, or
- a lapping machine,
- CNC milling.

The abrasion process is periodically interrupted to check the light tightness of the machined front element. This check is carried out by using a second "sequentially assembled modular structure" including the light detector only (i.e. lacking the scintillator). This procedure makes it possible to obtain detector's front covering layer having a thickness as small as 300µm or less, which is compatible with its use for detecting charged particles.

The process of fabricating and assembling the particle detector device according to the invention includes the following steps:
- Providing the components of the above-described sequentially assembled modular structure: outer shell J1a, J1b, B1; ambient light absorber F1a; light detector F1d; first housing F1c; second housing F1e; cable holder F1f; in particular, the first housing F1c, the second housing F1e and the cable holder F1f form a single body;
- Inserting the light detector F1d, with its wires F1g, through the front face of the elements F1e and F1f and through the first housing F1c, and routing the wires through the opening of the cable holder F1f; in particular, the wires F1g are first inserted through the hole of the component B1 and then welded to the light detector F1d;

- Pulling the wires F1g from the outside until the light detector F1d abuts on the element F1f;
- Inserting the front face of the scintillator F1b until it comes in contact with the light detector F1d inside the element F1c (hole F1c2);
- Applying the light absorber F1a onto the front face of the system;
- Inserting the whole system into the outer shell;
- Closing the outer shell, e.g. by screwing or fitting the front and rear elements to each other.

The above-described non-limiting examples may be subject to further variations without however departing from the protection scope of the present invention, including all equivalent embodiments known to a person skilled in the art.

The elements and features shown in the various preferred embodiments may be combined together without however departing from the protection scope of the present invention.

From the above description, those skilled in the art will be able to produce the object of the invention without introducing any further construction details.

## Claims

1. Beta-particle detector device for nuclear medicine, in particular adapted for applications of mini-invasive radio-guided surgery, the device being provided with an outer shell, said outer shell having a front element, through which incident radiation enters when in use, and a rear element, through which electric wires come out, which are adapted to transport an electric signal when in use, and **characterized in that** it has a sequentially assembled modular structure and comprises the following components, adapted to be inserted, when assembled, in said outer shell (J1a, J1b, B1):
- an ambient light absorber (F1a), adapted to prevent light with a wavelength in the visible spectrum or in the near-UV spectrum from entering the device, and adapted to let said beta particles enter the device;
- a scintillator (F1b), positioned downstream of said absorber (F1a) along the direction of said incident radiation and said beta particles, and adapted to receive said beta particles from said absorber (F1a) and convert them into light,
- a first housing (F1c) for said scintillator (F1b), adapted to fully contain said scintillator (F1b),
- a light detector (F1d), positioned downstream of said scintillator (F1b) along the direction of said beta particles and said light, said light detector (F1d) being adapted to convert the light produced by said scintillator into an electric signal, said light detector (F1d) being provided with electric wires (F1g) exiting on the side opposite said first housing (F1c),
- a second housing (F1e) for said light detector (F1d), adapted to fully contain said light detector (F1d);
- a cable holder (F1f), positioned downstream of said second housing (F1e) along the direction of said light, and adapted to contain said electric wires (F1g) and let them exit said device.

2. Device as in claim 1, wherein said ambient light absorber (F1a) comprises:
- a thin-film layer of a material with a low atomic number (Z) and high absorbing power in the visible spectrum, or
- an absorbing wall (F1a'), positioned towards the outer wall of the device and comprising a layer of polyvinyl fluoride, and a reflecting wall (F1a"), positioned towards the inner part of the device and comprising a layer of aluminized mylar or aluminium film.

3. Device as in claim 1 or 2, wherein said scintillator (F1b) comprises:
- a solid P-terphenyl layer, or
- a P-terphenyl layer obtained by deposition on substrate (e.g. sputtering); or
- a commercial plastic material.

4. Device as in any one of the preceding claims, wherein said light detector (F1d) comprises:
- a single Silicon Photo Multiplier (SiPM) or an array thereof; or
- an APD scintillation light detector, or photodiodes, or a solid-state detector.

5. Device as in any one of the preceding claims, wherein said first housing (F1c) comprises a first inner cavity (F1c2), the shape of which is adapted to firmly house said scintillator (F1b).

6. Device as in any one of the preceding claims, wherein said first housing (F1c) comprises grooves (F1c1) on its outer edge facing said ambient light absorber (F1a).

7. Device as in any one of the preceding claims, wherein said second housing (F1e) comprises a second inner cavity (F1e1), the shape of which is adapted to firmly house said light detector (F1d).

8. Device as in any one of the preceding claims, wherein said cable holder (F1f) comprises internal through holes (F1f1) adapted to contain said electric wires (F1g), and at least one abutment wall (F1f2),
wherein said internal through holes (F1f1) are formed on the abutment wall (F1f2), wherein said light detector (F1d) is positioned in abutment with said at least one abutment wall (F1f2).

9. Device as in any one of the preceding claims, comprising a layer (S1) adapted to provide insulation against electromagnetic interference on the outer surface of one or more of said first housing (F1c), second housing (F1e), cable holder (F1f).

10. Method of making the particle detector device according to any one of the preceding claims, comprising the following steps:
- providing said outer shell (J1a, J1b, B1), said ambient light absorber (F1a), said scintillator (F1b), said light detector (F1d), said first housing (F1c), said second housing (F1e), said cable holder (F1f), and forming a single body with said first housing (F1c), said second housing (F1e) and said cable holder (F1f);
- inserting, from the front face of said second housing (F1e) and cable holder (F1f), said light detector (F1d) and said electric wires (F1g) through said first housing (F1c), routing said electric wires through said internal through holes (F1f1);
- pulling said electric wires (F1g) from the outside of the device until said light detector (F1d) abuts on said cable holder (F1f);
- inserting said scintillator (F1b) into said first hole (F1c2) of the first housing (F1c) until it comes in contact with said light detector (F1d);
- applying said ambient light absorber (F1a) into said front element (J1a, J1b) in internal contact with a front wall (J1a) of said front element;
- inserting said scintillator (F1b), said light detector (F1d), said first housing (F1c), said second housing (F1e), said cable holder (F1f) into said outer shell;
- closing said outer shell by joining said front element and said rear element together.

11. Method as in claim 10, comprising the following steps:
- making said front wall (J1a) from plastic material,
- reducing the thickness of said front wall (J1a) by abrasion, for the purpose of limiting the absorption of beta radiation by said front wall;
- periodically interrupting said abrasion to verify the light tightness of said front wall (J1a) by means of a sequentially assembled modular structure comprising a light detector and lacking a scintillator.

12. Method as in claim 10 or 11, wherein said abrasion is effected by means of abrasive paper or powder, with regular and repetitive movements, through the use of a robotic arm, or a lapping machine, or a CNC milling machine.

13. Method as in any one of claims 10 to 12, comprising one or more of the following steps:
- making one or more of said first housing (F1c), said second housing (F1e), said cable holder (F1f) by using stereolithography 3D printing with materials suitable to ensure submillimeter dimensional precision, such as PEEK, ABS, ASA;
- making said first housing (F1c), said second housing (F1e), said cable holder (F1f) either as one piece or as distinct pieces;
- coating one or more of said first and second housings (F1c, F1e) and said cable holder (F1f) with a layer (S1) of a material suitable to ensure insulation against electromagnetic interference;
- inserting optical grease into said second housing (F1e);
- making said front and rear elements (J1a, J1b, B1) from a biocompatible and mechanically strong material by 3D printing, CNC machining, or mechanical machining;
- providing the contact ends between said front element (J1c) and rear element (B1a) with a liquid-tight seal.
